# FASCICULE DE BREVET EUROPEEN

(11) **EP 0 937 527 B1**
(45) Date de publication et mention de la délivrance du brevet: **18.06.2003**
(21) Numéro de dépôt: 99440031.5
(22) Date de dépôt: 18.02.1999
(51) Int. Cl.: B23D 63/18

(54) **Dispositif automatique et mécanique à planer et à tensionner les lames de scies**
Automatische Vorrichtung zum Mechanischen Planieren und Vorspannen von Sägeblättern
Device for automatically mechanically planing and tensioning saw blades

(30) Priorité: 19.02.1998 FR 9802164
(43) Date de publication de la demande: 25.08.1999
(73) Titulaire: Damgé, André, 67206 Mittelhausbergen (FR)
(72) Inventeur: Damgé, André, 67206 Mittelhausbergen (FR)
(74) Mandataire: Nuss, Pierre

(56) Documents cités:
- WO-A-92/19407
- DE-A- 3 213 572
- DE-C- 3 313 160
- US-A- 4 107 983
- US-A- 4 852 430
- US-A- 4 875 393

## Description

La présente invention concerne le domaine de la réparation ou réfection des lames de scies, en particulier de lames de scies à rubans, et a pour objet un dispositif automatique et mécanique à planer, à tensionner et à redresser les dents de telles lames.

Les lames de scies à rubans sont utilisées dans les scieries sur des scies dites "de têtes" ou "de reprise". Elles sont généralement disposées sur deux volants placés l'un au-dessus de l'autre, la lame étant maintenue verticalement par ces deux volants cylindriques.

Lors de la coupe, les lames sont sollicitées de façon importante. En effet, outre les efforts mécaniques qui s'appliquent sur elles, d'autres facteurs agissent de manière déterminante sur leur usure et donc sur leur durée de vie.

Les différentes qualités du bois à couper font que des éléments indésirables tels que noeuds naturels, cailloux ou éclats de métal (bois "mitraillé") peuvent être présents en quantités plus ou moins importantes. Ces corps durs étrangers dans le bois sont autant d'éléments qui peuvent prématurément user ou déformer, voire détériorer, la denture et/ou le corps des lames utilisées.

En règle générale, et selon la qualité du bois scié, une lame de scie est remplacée après quatre à huit heures d'utilisation. Les lames usées et/ou abîmées sont enlevées de la scie et remises en état dans une salle spéciale dite "d'affûtage" ou chez un affûteur.

Lors de cette remise en état, une première série d'opérations concerne la réfection de la denture de la lame. L'opérateur en charge de ce travail redresse affûte et remplace les dents défectueuses par un travail manuel souvent long et fastidieux. Ensuite, l'opérateur exécute une deuxième série d'opérations sur le corps même de la lame, à savoir le planage, le tensionnage et éventuellement le dégauchissage de la lame.

Les défauts de planage consistent en de petites bosses ou creux sur le corps de lame qui provoquent une déviation de la lame lors de la coupe. Ces bosses ou creux doivent être éliminés de façon à obtenir une lame parfaitement plane.

Jusqu'à présent, cette opération était le plus souvent réalisée manuellement. Pour cela l'opérateur repérait les défauts à l'oeil et avec l'aide d'une petite réglette métallique. Puis l'opérateur éliminait les bosses en frappant la lame à l'aide d'un marteau à panes. Pour éliminer les creux, l'opérateur était obligé de retourner la lame, ce qui compte tenu des dimensions et du poids de celle-ci, était à la fois difficile et dangereux.

L'opération de tensionnage consiste à bomber le corps de la lame afin que celle-ci épouse parfaitement la forme des volants qui l'entraînent. Pour ce faire, on lamine à froid la zone située au centre de la lame par l'intermédiaire, par exemple, d'un tendeur constitué de deux galets motorisés qui viennent écraser la lame. Cette opération, qui est encore le plus souvent réalisée à la main, est également très éprouvante et demande, comme le planage, beaucoup de savoir-faire et d'expérience. En effet, lorsque le tensionnage est terminée, on s'aperçoit fréquemment que celui-ci a déformé le planage. Il en résulte que l'opérateur peut parfois être amené à recommencer plusieurs fois de suite ces deux opérations ce qui n'est, bien entendu, ni souhaitable, ni économiquement rentable.

Les opérations décrites ci-dessus sont donc généralement très complexes, longues et pénibles, en raison notamment du poids important des lames à réparer. En raison de la technicité de ces opérations, du savoir-faire et de l'expérience requises pour les mener à bien, ces dernières sont souvent laissées à la charge de sociétés externes spécifiques lorsque l'entreprise ou la scierie ne dispose pas d'un personnel spécialement formé à ces tâches. Les coûts et des délais d'attente qui en résultent représentent un facteur de contrainte considérable, en particulier pour les petites entreprises qui ne peuvent se permettre de posséder un grand nombre de lames de rechange.

Il existe déjà des machines électroniques qui réalisent une partie de ces opérations de réfection des dentures et des corps de lames. Outre le fait que qu'aucune de ces machines n'effectue, de manière automatique, toutes les opérations précitées nécessaires à une réparation complète de la lame, il faut ajouter que de telles machines sont en général, d'une part, très sophistiquées, donc chères et d'une difficulté d'utilisation incompatible avec la qualification des utilisateurs potentiels, et, d'autre part, lentes donc peu rentables.

La demande internationale publiée sous le n° WO 92/19407 A divulgue un dispositif de réfection de lames de scies à ruban selon le préambule de la revendication 1. Toutefois, le dispositif qui y est décrit ne permet pas de transformer le mouvement de défilement de la lame en un mouvement proportionnel transversal de l'ensemble fonctionnel comprenant au moins un moyen de planage et au moins un moyen de tensionnage. Ainsi, du fait que l'entraînement de la lame est réalisé par les moyens de tensionnage, il ne peut être garanti dans ce type de machine connu, que le résultat de l'opération de planage reste inaltéré par l'opération de tensionnage et vice-versa.

La présente invention a pour objet de pallier les inconvénients cités en fournissant un dispositif automatique, entièrement mécanique, réalisant à la fois le planage, le tensionnage et le redressage des lames de scies à rubans en une seule opération de traitement et sans qu'une phase de traitement n'altère les effets bénéfiques de la ou des phases de traitement précédente(s).

Le dispositif pour la réfection des lames de scies à ruban, en particulier pour leur planage et leur tensionnage, conforme à la présente invention est constitué par:
- un bâti support portant un ensemble fonctionnel pouvant être déplacé perpendiculairement à la direction de défilement de la lame en cours de traitement et comprenant au moins un moyen de planage et au moins un moyen de tensionnage,
- un moyen d'entraînement par friction de la lame, relié à un moteur ou analogue et assurant le défilement de la lame à traiter, et,
- un moyen entraîné par friction par la lame en déplacement et associé à des moyens de transmission débrayables pouvant transformer le mouvement de défilement de la lame en un mouvement proportionnel de translation transversal de l'ensemble fonctionnel.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1A est une vue schématique de face d'un mode de réalisation du dispositif selon l'invention;
la figure 1B est une vue schématique partielle de face d'une variante de réalisation de la partie inférieure du dispositif représenté sur la figure 1A;
la figure 2 représente une vue de côté simplifiée du dispositif de la figure 1A;
la figure 3 représente une vue simplifiée en élévation latérale du dispositif d'une deuxième variante de réalisation du dispositif selon l'invention;
la figure 4 est une vue en coupe et en élévation latérale d'un moyen de plannage utilisé dans le dispositif de la présente invention;
la figure 5 est une vue en coupe et en élévation latérale d'un moyen de tensionnage utilisé dans le dispositif de la présente invention, et
la figure 6 est une vue partielle en perspective d'un flanc latéral de l'ensemble fonctionnel faisant partie du dispositif selon l'invention.

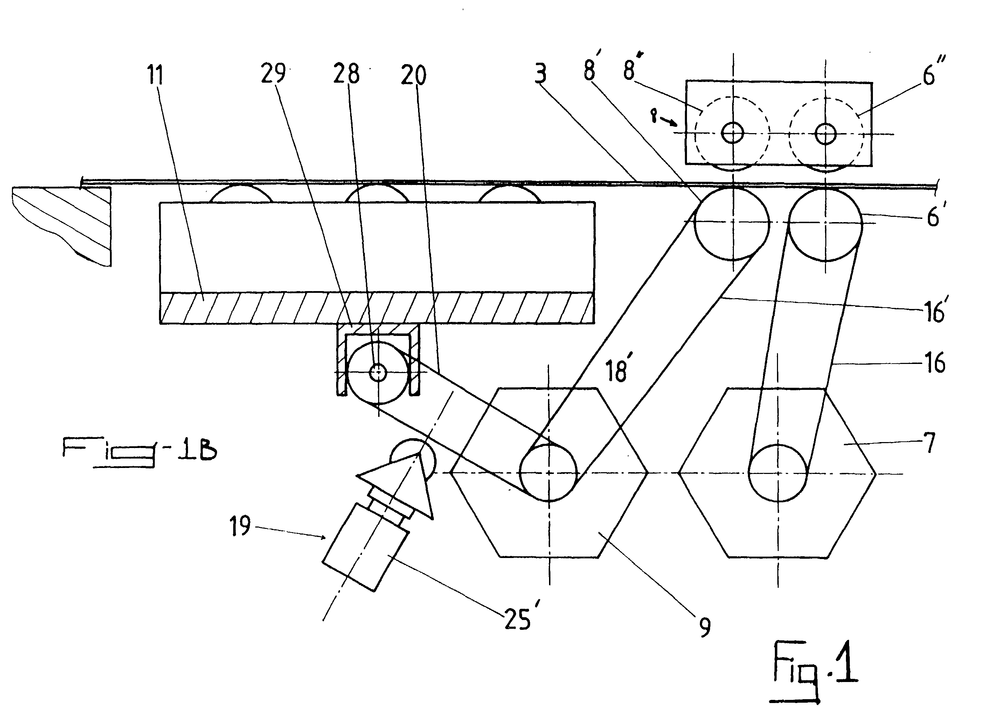

Comme le montre la figure 1A, le dispositif de la présente invention est constitué par un bâti support 1, par exemple en tubes mécano-soudés, portant un ensemble fonctionnel 2 pouvant être déplacé perpendiculairement à la direction de défilement de la lame 3 en cours de traitement et comprenant au moins un moyen de planage 4, 4' et au moins un moyen de tensionnage 5,
- un moyen d'entraînement 6 par friction de la lame 3, relié à un moteur 7 ou analogue et assurant le défilement de la lame 3 à traiter, et,
- un moyen entraîné 8 par friction par la lame 3 en déplacement et associé à des moyens de transmission débrayables 9 pouvant transformer le mouvement de défilement de la lame 3 en un mouvement proportionnel de translation transversal de l'ensemble fonctionnel 2.

L'ensemble fonctionnel 2, encore appelé "col de cygne", supporte les galets 10, 10' et 10" des moyens de planage 4, 4' et de tensionnage 5 qui exercent la sollicitation réparatrice sur la lame 3. Le moyen d'entraînement 6 est constitué par un rouleau 6' mû par un moteur 7 ou analogue, et un rouleau presseur 6" réalisant, ensemble avec le rouleau 6', l'entraînement par friction de la lame 3. Les moyens de transmission débrayables 9 situés entre le rouleau 8' du moyen entraîné 8 et le châssis mobile 11 du "col de cygne", permettent de mettre ce dernier en mouvement. Un pupitre de commande (non représenté) regroupe les différentes commandes nécessaires au pilotage de la machine.

Dans un mode de réalisation particulièrement avantageux, le dispositif selon l'invention comporte au moins un moyen de planage 4 spécifique aux creux, au moins un moyen de planage 4' spécifique aux bosses et au moins un moyen de tensionnage 5. Ainsi, il est possible d'effectuer sur la même machine les deux opérations distinctes de planage et de tensionnage des lames 3 à réparer. Grâce à la combinaison des deux moyens de planage 4, 4', l'un pour les creux, l'autre pour les bosses, le planage peut être exécuté de manière sûre et commode, les lames 3 n'ayant plus besoin d'être retournées.

Le ou les moyen(s) de planage 4, 4' et/ou le ou les moyen(s) de tensionnage 5 est/sont réalisé(s) sous la forme d'un groupement de galets 10, 10', 10" non-entraîneurs opposés pouvant contacter, de part et d'autre, les surfaces de la lame 3 à traiter. Le ou les moyen(s) de planage 4, 4' et/ou le ou les moyen(s) de tensionnage 5 comprend ou comprennent un galet 10 central bombé opposé à un autre galet 10 central bombé.

Dans une variante préférée, le ou les moyen(s) de planage 4, 4' et/ou le ou les moyen(s) de tensionnage 5 comprend ou comprennent un galet 10 central bombé opposé à une paire de galets 10' et 10" plats.

La figure 4 montre, de manière agrandie par rapport à la figure 1A, une coupe d'un moyen de planage 4 destiné à éliminer creux où les deux galets 10' et 10" plats sont alors situés au-dessus de la lame 3, le galet 10 central bombé étant monté fixe en regard des deux galets 10' et 10" plats sous la lame 3. De manière analogue, un moyen 4' destiné à traiter bosses aura les galets 10' et 10" plats qui se trouvent sous la lame 3, le galet 10 central bombé étant monté au-dessus de cette dernière et en regard des galets 10', 10" plats précités.

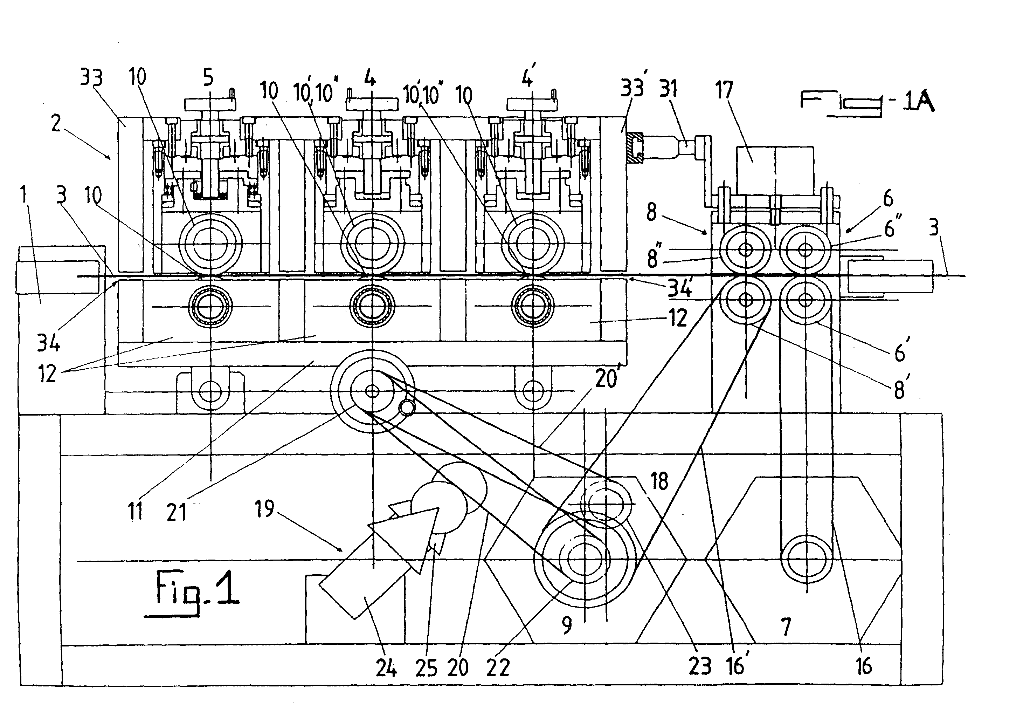

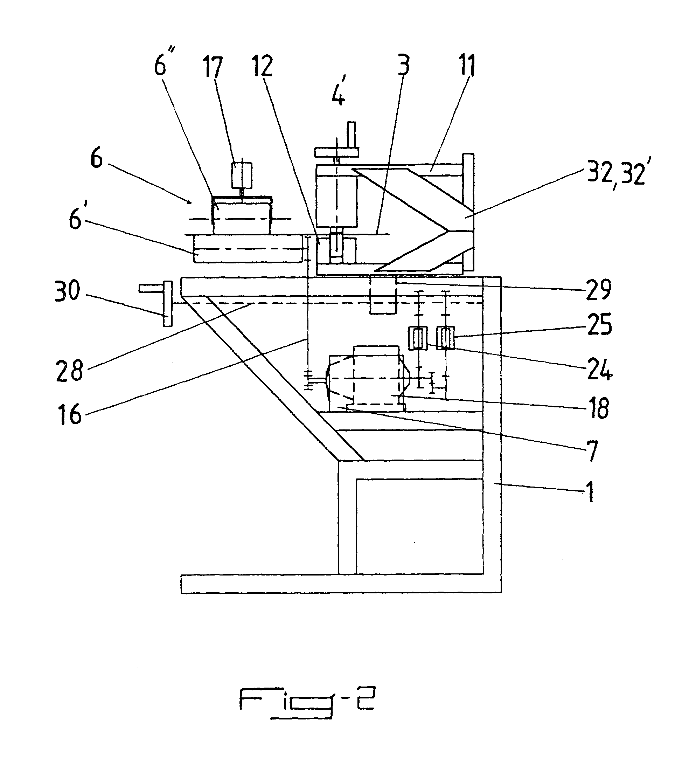

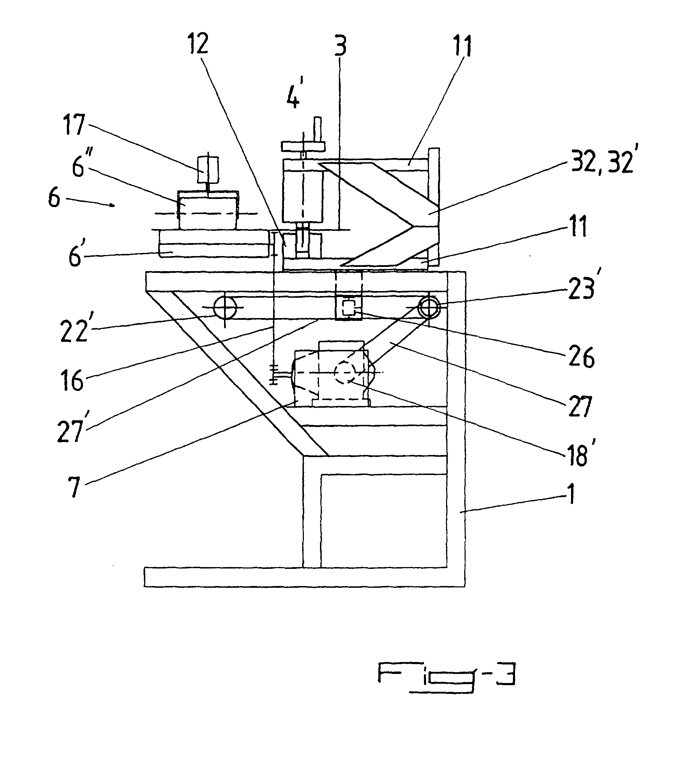

La figure 5 montre, également de manière agrandie par rapport à la figure 1A, un mode de réalisation du moyen de tensionnage 5 utilisé dans la présente invention. On note que ce moyen de tensionnage peut être réalisé d'une manière analogue au moyen de planage 4, 4' en ce qui concerne le groupement de galets et le moyen de réglage qui sera détaillé plus loin. La figure 5 montre aussi que ces deux galets 10 centraux bombés ne sont pas exactement alignés l'un au-dessus de l'autre, mais qu'un léger décalage latéral existe entre eux. Ce décalage peut, lorsqu'il est trop important, induire des efforts axiaux parasites qui font dévier ou qui tordent la lame 3 en traitement. Pour pallier ce problème on préférera la solution des galets mixtes qui permet de réduire les conséquences d'un mauvais alignement des axes. Dans cette solution l'effort transversal induit sur la lame 3 est nul, même lorsque les galets 10, 10', 10" opposés sont mal alignés. Cette solution permet également une meilleure répartition des contraintes exercées sur le lame 3. En effet, à effort appliqué constant, la pression de contact est supérieure lorsque le contact s'effectue sur un point (galet 10 central bombé) plutôt que sur une ligne (galets 10', 10" plats). La "peau supérieure" de la lame 3 sera plus étirée que la "peau" inférieure ce qui entraîne que la lame 3 épousera mieux les formes du volant de la scie.

Comme le montrent les figures 1A, 4 et 5, les galets 10, 10' et 10" inférieurs qui sont situés sous la lame 3, dans leurs logements 12 forment une rampe de galets non-entraîneurs, où les galets 10, 10' et 10" roulent librement comme des roulements. Les positions de ces galets 10, 10' et 10" sur l'élément fonctionnel 2 sont fixes, les galets ne pouvant se déplacer dans leurs logements respectifs ni vers le haut, ni vers le bas. De cette manière, les galets 10, 10' et 10" situés sous la lame 3 ont un plan tangentiel supérieur commun, à savoir celui qu'aurait une lame 3 parfaitement plane reposant sur ces galets. Les galets 10, 10' et 10" situés au-dessus de la lame 3 sont également libres en rotation mais leurs positions verticales, c'est-à-dire les distances qui les séparent peuvent en outre être réglées individuellement pour chaque ensemble de galets (un galet 10 central bombé ou deux galets 10', 10" plats) en réglant la position verticale du moyen 4, 4' ou 5 qui les supporte.

Une certaine pression est exercée sur le galet 10 central bombé supérieur qui enlève les bosses ou sur les galets 10' et 10" plats qui enlèvent les creux. La pression qui est appliquée est celle réglée par l'opérateur, seul juge de l'ampleur des défauts. L'écartement entre les deux galets 10 centraux bombés ou un galet 10 central bombé les deux galets 10', 10" plats opposés du ou des moyen(s) de planage 4, 4' et/ou de tensionnage 5 est réalisé par un moyen de réglage mécanique 13 actionné manuellement, hydrauliquement ou pneumatiquement. Ce moyen de réglage mécanique 13 peut comprendre un vérin 14 réglable en pression (figure 5) agissant directement sur les galets 10, 10', 10" pour un tensionnage par contrôle de la force appliquée. Le tensionnage peut aussi s'effectuer en pilotant les galets en déplacement. Les galets 10, 10', 10" imposent alors à la lame 3 de s'écraser jusqu'à une valeur constante. C'est le tensionnage de la lame avec contrôle en position. Le moyen de réglage mécanique 13 comprend, par exemple, une vis sans fin 14' et une poignée d'actionnement 15 (figure 4). Bien entendu, d'autres moyens analogues peuvent également être utilisés pour ce moyen de réglage.

Comme on le voit sur les figures 1A, 1B, 2 et 3, le moyen d'entraînement 6 et le moyen entraîné 8 sont à chaque fois réalisés préférentiellement sous la forme d'au moins une paire de rouleaux 6', 6" respectivement 8', 8". Le rouleau 6' est entraîné par un moteur 7 ou analogue dont le mouvement est transmis par l'intermédiaire d'une courroie 16 ou analogue. La vitesse du rouleau 6' peut être réglée par l'intermédiaire d'un variateur (non représenté).

Dans un mode de réalisation préférentiel et comme on peut le voir sur les figures 1A, 2 et 3, le contact des rouleaux 6', 6" du moyen d'entraînement 6 par friction avec la lame 3 est réalisé par un ensemble débrayable du type vérin(s) presseur(s) 17. La lame 3 est entraînée par friction par le rouleau 6' lorsque le rouleau presseur 6" situé au-dessus et en regard dudit rouleau 6' vient s'appuyer sur la lame 3. Les surfaces et/ou les matières des rouleaux 6', 6" sont choisies de manière à ce que l'entraînement par friction de la lame 3 soit suffisamment efficace. La lame 3 défile alors et, à ce moment précis, commence à entraîner, par friction, le moyen entraîné 8 qui est constitué, de manière analogue au moyen d'entraînement 6, par au moins une paire de rouleaux 8', 8", qui sont également mis en contact avec la lame 3 par l'intermédiaire du vérin presseur 17. Ce mode de réalisation d'entraînement par friction de la lame 3 permet également d'augmenter la sécurité d'utilisation du dispositif selon l'invention. Une lame 3 grasse aura, par exemple, tendance à patiner entre les rouleaux 6', 6" ce qui arrêtera automatiquement l'entraînement du moyen entraîné 8 et donc de l'ensemble fonctionnel 2.

Comme on peut le voir sur les figures 1A et 1B, les galets (10, 10', 10") du côté inférieur de la lame (3) possèdent un plan tangentiel à la lame (3) commun avec les rouleaux (6', 8') inférieurs du moyen d'entraînement (6) et du moyen entraîné (8).

Le fait que les galets 10, 10', 10" ne soient pas entraîneurs est une autre caractéristique essentielle de la présente invention. En effet, la lame étant "tirée" par le moyen d'entraînement 6, le planage n'est plus déformé par le tensionnage. De plus, ce mode d'entraînement permet de faire passer les galets 10, 10', 10" des moyens de planage 4, 4' et de tensionnage 5 entre les dents de la lame 3, ce qui ne serait pas possible avec des galets entraîneurs qui resteraient bloqués et ne feraient plus avancer ladite lame 3. Ceci a pour conséquence que l'on peut également utiliser lesdits galets pour redresser les dents tordues des lames 3. On obtient alors un dispositif qui permet à lui seul d'effectuer les trois principales opérations de réparation que l'on effectue habituellement sur des lames endommagées, ce qui représente bien sûr un gain de temps, d'argent, de confort et de sécurité considérables.

Le moyen entraîné (8) par friction est réalisé sous la forme d'au moins une paire de rouleaux (8', 8") montée fixe, relié au moyen d'entraînement (6) par friction et relié aux moyens de transmission débrayables (9) de l'ensemble fonctionnel (2). Le rouleau 8' est relié aux moyens de transmission débrayables 9 de l'ensemble fonctionnel 2 par l'intermédiaire d'une courroie 16'. Sur les figures 1A et 2 des dessins annexés représentant le dispositif selon l'invention, les moyens de transmission débrayables 9 comportent un réducteur 18 relié d'une part au moyen entraîné 8 et d'autre part au châssis mobile 11 de l'ensemble fonctionnel 2 par l'intermédiaire d'un organe débrayable 19 constitué par deux courroies 20, 20' reliant une poulie double 21 du châssis mobile 11 de l'ensemble fonctionnel 2 à deux poulies 22, 23 montées sur le réducteur 18 et ayant des sens de rotations contraires ainsi que deux tendeurs de courroie débrayables 24, 25 qui, en tendant l'une ou l'autre des deux courroies 20, 20' précitées, permettent l'inversion du mouvement du châssis mobile 11 précité.

Dans la variante présentée à la figure 1B, les moyens de transmission débrayables 9 comportent un réducteur 18' possédant au moins une sortie inversable relié, d'une part, au moyen entraîné 8 par la courroie 16' et, d'autre part, au châssis mobile 11 de l'ensemble fonctionnel 2 par l'intermédiaire d'un organe débrayable 19 qui peut être un tendeur de courroie 25' tendant la courroie 20 qui assure la liaison entre le réducteur 18' et une poulie simple entraînant le châssis mobile 11.

Dans la variante présentée à la figure 3, les moyens de transmission débrayables 9 comportent un réducteur 18 entraînant par le biais d'une courroie 27, une autre courroie 27' reliant les deux poulies 22' et 23' disposées sous l'ensemble fonctionnel 2 à déplacer. Cette courroie 27' peut être pincée sur son bord supérieur ou inférieur par le vérin de pincement 26, déterminant ainsi le sens de déplacement du châssis mobile 11 entraîné.

Comme on peut le voir, notamment sur les figures 1B et 2, l'entraînement de l'ensemble fonctionnel 2 dans la direction perpendiculaire à celle du défilement de la lame 3 peut aussi être assuré, par exemple, par l'intermédiaire d'une vis 28 trapézoïdale, portant une poulie double ou simple entraînée par une ou deux courroie(s), et d'un écrou (29). Cette vis 28 trapézoïdale peut également être actionnée manuellement par une poignée 30 ou tout autre moyen analogue (figure 2). L'entraînement et/ou le déplacement de l'ensemble fonctionnel 2 peut avantageusement être limité et/ou inversé par un ou plusieurs capteur(s) de fin de course 31 (figure 1A).

Comme on peut le voir sur les figures 2 et 3, l'ensemble fonctionnel 2 comporte, et est monté dans, un châssis mobile 11 réalisé en forme de U couché, délimité latéralement par des entretoises 32, 32' en forme de V couché. Cette structure permet d'assurer une rigidité suffisante entre les deux pans horizontaux du châssis mobile 11, dont le pan supérieur porte les moyens de planage 4, 4' et de tensionnage 5. En même temps cette structure laisse, avec l'ouverture du V du côté de la lame 3, assez de place à cette dernière lorsque le châssis mobile se déplace perpendiculairement à la direction du défilement de ladite lame 3.

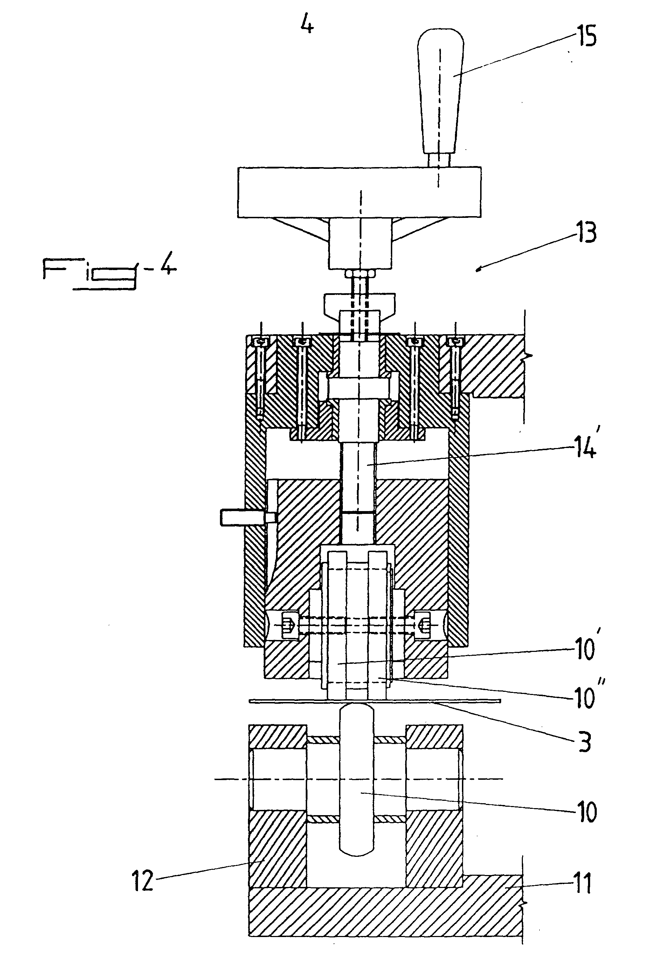

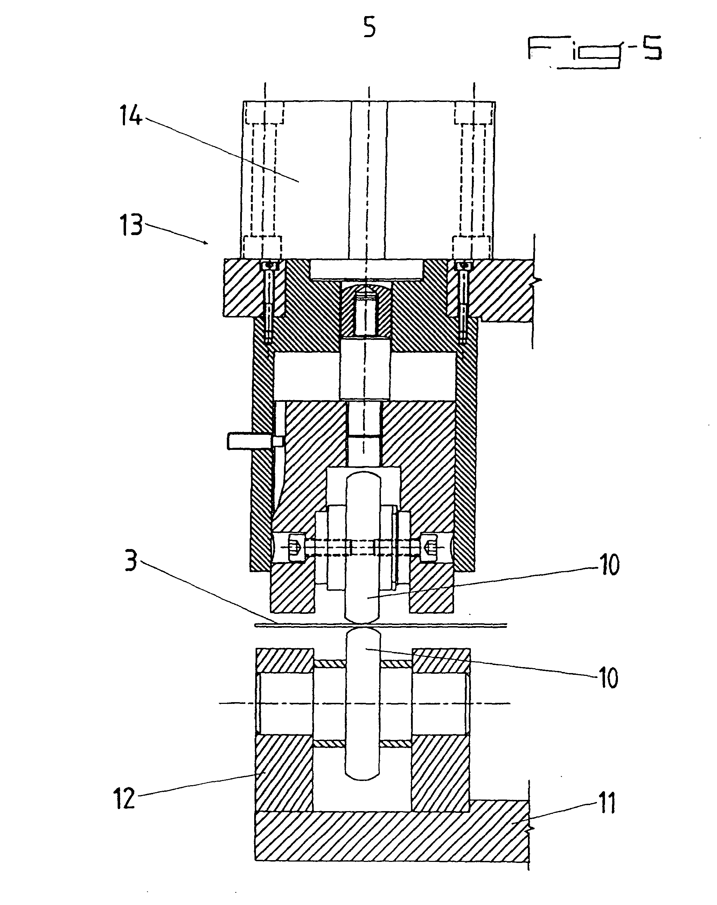

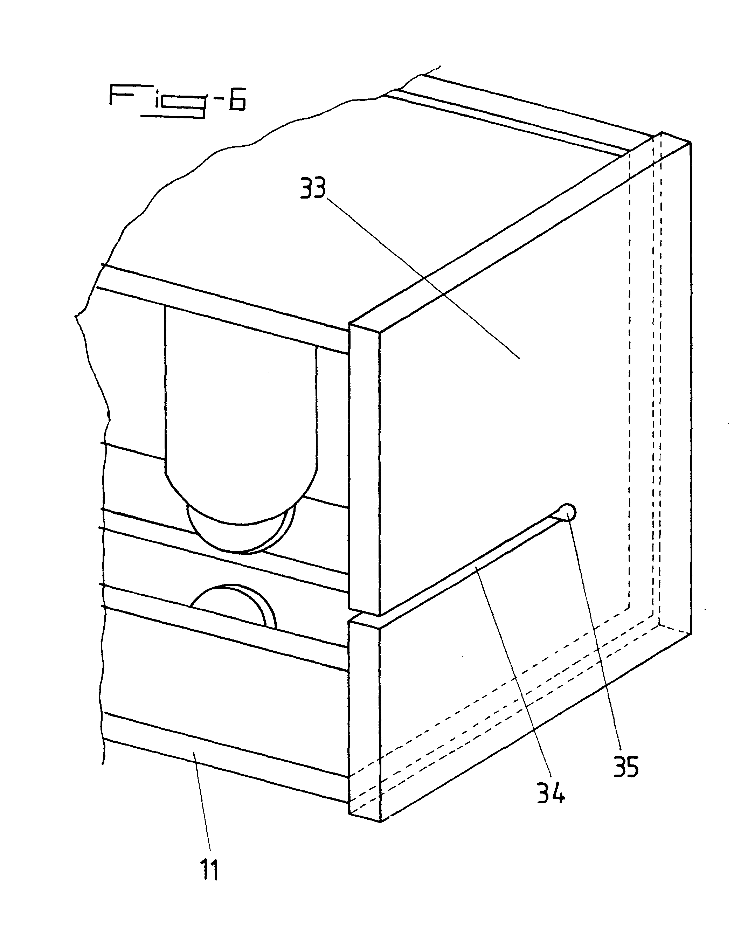

La figure 6 montre une vue simplifiée et agrandie d'un mode de réalisation de l'élément fonctionnel 2 où le châssis mobile 11 est délimité latéralement par des parois 33, 33' sensiblement pleines qui remplacent ou s'ajoutent aux entretoises 32, 32' en V couché précitées. Les accès latéraux à la lame 3 sont limités à deux rainures 34, 34' se terminant dans lesdites parois 33, 33' par deux orifices circulaires 35, 35' de diamètres supérieurs à la largeur desdites rainures 34, 34', les dimensions de ces dernières étant telles qu'elles permettent le passage de la lame 3 avec le jeu minimal nécessaire.

De cette manière on peut renforcer la sécurité d'utilisation du dispositif selon l'invention en diminuant les risques de projections ou de coupures, sans pour autant restreindre les dimensions admissibles pour les lames 3 à traiter. Une combinaison des entretoises 32, 32' en forme de V couché décrites ci-dessus avec des parois 33, 33' est particulièrement utile si on désire renforcer un châssis mobile 11 portant plus de trois moyens de réfection des lames 3.

Le dispositif selon l'invention peut, en outre, comporter, par exemple à l'une de ces extrémités, un marbre servant de surface d'appui et de guidage de la lame 3 à traiter ainsi que de surface de contrôle de l'état de la lame 3 avant et après traitement. Le marbre est préférentiellement placé du côté opposé des moyens d'entraînement de l'ensemble fonctionnel 2. Il s'agit alors d'un marbre de contrôle qui peut être monté de manière réglable sur un arrangement de tubes liés au bâti 1. De cette façon, l'orientation du marbre peut être réglée facilement, par exemple au moyen de vis, pour venir en concordance avec les galets 10, 10' et 10" des moyens de réfection de la lame 3. Le marbre sert également de référence pour le guidage latéral de la lame 3. Il est délimité d'un côté par un rebord qui bloque les dents et protège l'utilisateur contre les coupures accidentelles. Sur le côté opposé dudit marbre, un appui ponctuel est réalisé à partir d'un petit parallélépipède coulissant sur un axe perpendiculaire à la direction de défilement de la lame 3. Bloqué sur cet axe, cet appui ponctuel assure un maintien en position de la lame 3.

Le fonctionnement d'une machine comprenant un dispositif selon l'invention dans la variante représentée à la figure 1A est le suivant:

Tout d'abord l'opérateur installe la lame sur le dispositif selon l'invention et effectue un premier contrôle visuel de l'état de la lame 3. De ce contrôle va dépendre l'étendue de la zone sur laquelle la lame 3 va être traitée lors du déplacement, sous la forme d'un balayage, de l'ensemble fonctionnel 2. Selon la localisation et l'étendue de la zone précitée, l'opérateur positionne le ou les capteur(s) de fin de course 31. Une fois la machine mise sous tension, il positionne manuellement les têtes des moyens de planage 4, 4' à 5 mm du dos de la lame 3 à traiter. Les deux têtes précitées sont alors serrées, puis le rouleau 6' entraîneur est mis en route. Lorsque le rouleau 6" presseur est appliqué sur la surface supérieure de la lame 3 contre le rouleau 6' inférieur par l'intermédiaire du vérin presseur 17, la lame 3 défile entraînant par friction le moyen entraîné 8 qui transforme ledit mouvement de défilement de la lame 3 en un mouvement de translation transversal de l'ensemble fonctionnel 2 : c'est le balayage. Cette transformation s'opère de la manière suivante : lorsque le rouleau 8' se met en mouvement, il commande la courroie 16' qui va vers le réducteur (figure 1A). Les courroies 20, 20' d'entraînement de l'ensemble fonctionnel 2 ou "col de cygne" sont en positions détendues et rien ne se passe. L'application de l'un des deux tendeurs de courroie 24, 25 sur l'une desdites courroies 20, 20' tend cette dernière qui fait alors tourner la vis 28 dans l'écrou 29 solidaire du col de cygne et celui-ci se déplace vers les dents à raison, par exemple, de 8 mm par tour de la lame 3. En fin de parcours, une butée classique positionnée sur le col de cygne passe sur un inverseur, libérant le tendeur de courroie 24, 25 non utilisé : c'est l'inversion du sens de rotation par pignon intermédiaire. Le col de cygne se déplace alors vers le dos de la lame 3. A cet endroit, une fin de course l'arrête et termine le cycle. Il est évidemment possible d'effectuer plusieurs cycles identiques à la suite. Si malgré tout quelques défauts devaient subsister sur la lame 3, l'opérateur peut finir son travail en se mettant en mode manuel, c'est-à-dire en débrayant le tendeur de courroie 24 ou 25. Une fois le planage terminé l'opérateur effectue le tensionnage qui s'effectue de manière analogue au planage et qui peut être manuel, hydraulique ou pneumatique selon que le serrage des têtes du ou des moyen(s) de tensionnage 5 s'effectue à la main par l'opérateur ou par le biais d'un vérin. Dans ce dernier cas, la pression appliquée par le vérin est également dosée par l'opérateur. Les galets 10, 10', 10" du ou des moyen(s) de planage 4, 4' et/ou du ou des moyen(s) tensionnage 5 n'étant pas entraîneurs, il n'y a pas de déformation du planage par le tensionnage.

Dans un mode de réalisation préférentiel, le dispositif selon l'invention comporte un mode automatique dans lequel le balayage complet de la lame 3 s'effectue par des allers-retours de l'élément fonctionnel 2 ou col de cygne. Ceci permet d'éviter le gauchissage de la lame 3. En effet, la procédure de réparation prévoit un déplacement longitudinal de la lame 3 entre les galets 10, 10', 10" des moyens de planage 4, 4' et de tensionnage 5 qui se déplacent eux-mêmes transversalement et à une vitesse plus faible de sorte que les forces appliquées sur la lame 3 le sont dans une direction résultante qui n'est pas parallèle à la direction du défilement de ladite lame. En effectuant toujours cette opération dans le même sens, par exemple, de gauche à droite, la lame 3 en traitement a tendance à se tourner et ne plus rester droite. Pour pallier ce phénomène de gauchissement, la machine comportant le dispositif selon l'invention devra traiter la lame 3 dans un sens puis dans l'autre pour qu'il y ait compensation des contraintes gauchissant la lame 3.

## Revendications

1. Dispositif pour la réfection des lames de scies à ruban, en particulier pour leur planage et leur tensionnage comprenant
- un bâti support (1) portant un ensemble fonctionnel (2) pouvant être déplacé perpendiculairement à la direction de défilement de la lame (3) en cours de traitement et comprenant au moins un moyen de planage (4, 4') et au moins un moyen de tensionnage (5),
- un moyen d'entraînement (6) par friction de la lame (3), relié à un moteur (7) ou analogue et assurant le défilement de la lame (3) à traiter,
**caractérisé en ce qu'**il comprend
- un moyen entraîné (8) par friction par la lame (3) en déplacement et associé à des moyens de transmission débrayables (9) pouvant transformer le mouvement de défilement de la lame (3) en un mouvement proportionnel de translation transversal de l'ensemble fonctionnel (2).

2. Dispositif selon la revendication 1, **caractérisé en ce qu'**il comporte au moins un moyen de planage (4) spécifique aux creux, au moins un moyen de planage (4') spécifique aux bosses et au moins un moyen de tensionnage (5).

3. Dispositif selon la revendication 1 ou 2, **caractérisé en ce que** le ou les moyen(s) de planage (4, 4') et/ou le ou les moyen(s) de tensionnage (5) est/sont réalisé(s) sous la forme d'un groupement de galets (10, 10', 10") non-entraîneurs opposés pouvant contacter, de part et d'autre, les surfaces de la lame (3) à traiter.

4. Dispositif selon l'une quelconque des revendications 1 à 3, **caractérisé en ce que** le ou les moyen(s) de planage (4, 4') et/ou le ou les moyen(s) de tensionnage (5) comprend ou comprennent un galet (10) central bombé opposé à un autre galet (10) bombé.

5. Dispositif selon l'une quelconque des revendications 1 à 3, **caractérisé en ce que** le ou les moyen(s) de planage (4, 4') et/ou de tensionnage (5) comprend ou comprennent un galet (10) central bombé opposé à une paire de galets (10', 10") plats.

6. Dispositif selon l'une quelconque des revendications 1 à 5, **caractérisé en ce que** l'écartement entre les deux galets (10) centraux bombés ou un galet (10) central bombé les deux galets (10', 10") plats opposés du ou des moyen(s) de planage (4, 4') et/ou de tensionnage (5) est réalisé par un moyen de réglage mécanique (13) actionné manuellement, hydrauliquement ou pneumatiquement.

7. Dispositif selon la revendication 6, **caractérisé en ce que** le moyen de réglage mécanique (13) comprend un vérin (14) réglable en pression.

8. Dispositif selon la revendication 6, **caractérisé en ce que** le moyen de réglage mécanique (13) comprend une vis sans fin (14') et une poignée d'actionnement (15).

9. Dispositif selon l'une quelconque des revendications 1 à 8, **caractérisé en ce que** le moyen d'entraînement (6) par friction est réalisé sous la forme d'au moins une paire de rouleaux (6', 6") dont le contact par friction avec la lame (3) est réalisé par un ensemble débrayable du type vérin(s) presseur(s) (17).

10. Dispositif selon l'une quelconque des revendications 1 à 9, **caractérisé en ce que** le moyen entraîné (8) par friction est réalisé sous la forme d'au moins une paire de rouleaux (8', 8") montée fixe, relié au moyen d'entraînement (6) par friction et relié aux moyens de transmission débrayables (9) de l'ensemble fonctionnel (2).

11. Dispositif selon l'une quelconque des revendications 3 à 9, **caractérisé en ce que** les galets (10, 10', 10") du côté inférieur de la lame (3) possèdent un plan tangentiel à la lame (3) commun avec les rouleaux (6', 8') inférieurs du moyen d'entraînement (6) et du moyen entraîné (8).

12. Dispositif selon l'une quelconque des revendications 1 à 11, **caractérisé en ce que** les moyens de transmission débrayables (9) comportent un réducteur (18') possédant au moins une sortie inversable relié, d'une part, au moyen entraîné (8) par la courroie (16') et, d'autre part, au châssis mobile (11) de l'ensemble fonctionnel (2) par l'intermédiaire d'un organe débrayable (19).

13. Dispositif selon la revendication 12, **caractérisé en ce que** l'organe débrayable (19) est un tendeur de courroie (25') tendant la courroie (20) qui assure la liaison entre le réducteur (18') et une poulie simple entraînant le châssis mobile (11).

14. Dispositif selon l'une quelconque des revendications 1 à 11, **caractérisé en ce que** les moyens de transmission débrayables (9) comportent un réducteur (18) entraînant par le biais d'une courroie (27), une autre courroie (27') reliant les deux poulies (22', 23') disposées sous l'ensemble fonctionnel (2) à déplacer, cette courroie (27') pouvant être pincée sur son bord supérieur ou inférieur par le vérin de pincement (26), déterminant ainsi le sens de déplacement du châssis mobile (11) entraîné.

15. Dispositif selon l'une quelconque des revendications 1 à 11, **caractérisé en ce que** les moyens de transmission débrayables (9) comportent un réducteur (18) relié d'une part au moyen entraîné (8) et d'autre part à un châssis mobile (11), constituant de l'ensemble fonctionnel (2), par l'intermédiaire d'un organe débrayable (19) constitué par deux courroies (20, 20') reliant une poulie double (21) du châssis mobile (11) de l'ensemble fonctionnel (2) à deux poulies (22, 23) montées sur le réducteur (18) et ayant des sens de rotations contraires ainsi que deux tendeurs de courroie débrayables (24, 25), qui en tendant l'une ou l'autre des deux courroies précitées (20, 20') permettent l'inversion du mouvement du châssis mobile (11) précité.

16. Dispositif selon la revendication 13 ou 15, **caractérisé en ce que** l'entraînement de l'ensemble fonctionnel (2) dans la direction perpendiculaire à celle du défilement de la lame (3) est réalisé par l'intermédiaire d'une vis (28) trapézoïdale portant une poulie double ou simple entraînée par une ou deux courroie(s) et d'un écrou (29) et est limité et/ou inversé par un ou plusieurs capteur(s) de fin de course (31).

17. Dispositif selon la revendication 16, **caractérisé en ce qu'**il comporte un mode automatique dans lequel le balayage complet de la lame (3) s'effectue par des aller-retours de l'élément fonctionnel (2).

18. Dispositif selon l'une quelconque des revendications 1 à 17, **caractérisé en ce que** l'ensemble fonctionnel (2) comporte un châssis mobile (11) réalisé en forme de U couché qui est délimité latéralement par des entretoises (32, 32') en forme de V couché.

19. Dispositif selon la revendication 18, **caractérisé en ce que** le châssis mobile (11) est délimité latéralement par des parois (33, 33') sensiblement pleines.

20. Dispositif selon la revendication 19, **caractérisé en ce que** les accès latéraux à la lame (3) sont limités à deux rainures (34, 34') se terminant dans lesdites parois (33, 33') par deux orifices circulaires (35, 35') de diamètres supérieurs à la largeur desdites rainures (34, 34'), les dimensions de ces dernières étant telles qu'elles permettent le passage de la lame (3) avec le jeu minimal nécessaire.

21. Dispositif selon l'une quelconque des revendications 1 à 20, **caractérisé en ce qu'**il comporte, en outre, un marbre servant de surface d'appui et de guidage de la lame (3) à traiter ainsi que de surface de contrôle de l'état de la lame (3) avant et après traitement.

## Patentansprüche

1. Vorrichtung zur Instandsetzung von Bandsägeblättern, insbesondere zu deren Glättung und Spannung, umfassend
- einen Stützrahmen (1), der eine Funktionseinheit (2) trägt, die senkrecht auf die Ablaufrichtung des Blattes (3) während der Bearbeitung verschoben werden kann und mindestens ein Glättungsmittel (4, 4') und mindestens ein Spannungsmittel (5) umfasst,
ein Mittel (6) für den Antrieb des Blattes (3) durch Reibung, das mit einem Motor (7) oder dergleichen verbunden ist und das Ablaufen des zu bearbeitenden Blattes (3) gewährleistet,
**dadurch gekennzeichnet, daß** sie umfasst
ein durch Reibung von dem in Verschiebung befindlichen Blatt (3) angetriebenes Mittel (8), das mit ausschaltbaren Übertragungsmitteln (9) verbunden ist, die die Ablaufbewegung des Blattes (3) in eine proportionale Quertranslationsbewegung der Funktionseinheit (2) umwandeln können.

2. Vorrichtung nach Anspruch 1, **dadurch gekennzeichnet, daß** sie mindestens ein Glättungsmittel (4), das für die hohlen Teile spezifisch ist, und mindestens ein Glättungsmittel (4'), das für die erhabenen Teile spezifisch ist, und mindestens ein Spannungsmittel (5) umfasst.

3. Vorrichtung nach Anspruch 1 oder 2, **dadurch gekennzeichnet, daß** das oder die Glättungsmittel (4, 4') und/oder das oder die Spannungsmittel (5) in Form einer Gruppierung von nicht antreibenden gegenüber liegenden Rollen (10, 10', 10") ausgeführt ist/sind, die auf beiden Seiten die Oberflächen des zu bearbeitenden Blattes (3) berühren können.

4. Vorrichtung nach einem der Ansprüche 1 bis 3, **dadurch gekennzeichnet, daß** das oder die Glättungsmittel (4, 4') und/oder das oder die--Spannungsmittel (5) eine zentrale gewölbte Rolle (10), die einer weiteren gewölbten Rolle (10) gegenüber liegt, umfasst oder umfassen.

5. Vorrichtung nach einem der Ansprüche 1 bis 3, **dadurch gekennzeichnet, daß** das oder die Glättungsmittel (4, 4') und/oder Spannungsmittel (5) eine zentrale gewölbte Rolle (10) umfasst oder umfassen, die einem flachen Rollenpaar (10', 10") gegenüber liegt.

6. Vorrichtung nach einem der Ansprüche 1 bis 5, **dadurch gekennzeichnet, daß** der Abstand zwischen den beiden zentralen gewölbten Rollen (10) oder einer zentralen gewölbten Rolle (10) und den beiden gegenüber liegenden flachen Rollen (10', 10") des oder der Glättungsmittel (4, 4') und/oder Spannungsmittel (5) durch ein mechanisches Einstellmittel (13) hergestellt ist, das manuell, hydraulisch oder pneumatisch betätigt wird.

7. Vorrichtung nach Anspruch 6, **dadurch gekennzeichnet, daß** das mechanische Einstellmittel (13) einen hinsichtlich des Drucks einstellbaren Zylinder (14) umfasst.

8. Vorrichtung nach Anspruch 6, **dadurch gekennzeichnet, daß** das mechanische Einstellmittel (13) eine Schnecke (14') und einen Betätigungsgriff (15) umfasst.

9. Vorrichtung nach einem der Ansprüche 1 bis 8, **dadurch gekennzeichnet, daß** das Mittel (6) zum Antrieb durch Reibung in Form von mindestens einem Walzenpaar (6', 6") ausgeführt ist, dessen Berührung durch Reibung mit dem Blatt (3) durch eine ausschaltbare Einheit des Typs Druckzylinder (17) hergestellt ist.

10. Vorrichtung nach einem der Ansprüche 1 bis 9, **dadurch gekennzeichnet, daß** das durch Reibung angetriebene Mittel (8) in Form von mindestens einem fest montierten Walzenpaar (8', 8") ausgeführt ist, das mit dem Mittel (6) zum Antrieb durch Reibung und den ausschaltbaren Übertragungsmitteln (9) der Funktionseinheit (2) verbunden ist.

11. Vorrichtung nach einem der Ansprüche 3 bis 9, **dadurch gekennzeichnet, daß** die Rollen (10, 10', 10") auf der Unterseite des Blattes (3) eine zu dem Blatt (3) tangentiale Ebene umfassen, die mit den unteren Walzen (6', 8') des Antriebsmittels (6) und des angetriebenen Mittels (8) gemeinsam ist.

12. Vorrichtung nach einem der Ansprüche 1 bis 11, **dadurch gekennzeichnet, daß** die ausschaltbaren Übertragungsmittel (9) ein Reduktionsmittel (18') umfassen, das mindestens einen umkehrbaren Ausgang besitzt, der einerseits mit dem durch den Riemen (16') angetriebenen Mittel (8) und andererseits dem beweglichen Rahmen (11) der Funktionseinheit (2) durch ein ausschaltbares Element (19) verbunden ist.

13. Vorrichtung nach Anspruch 12, **dadurch gekennzeichnet, daß** das ausschaltbare Element (19) ein Riemenspanner (25') ist, der den Riemen (20) spannt, der die Verbindung zwischen dem Reduktionsmittel (18') und einer einfachen Rolle, die den beweglichen Rahmen (11) antreibt, gewährleistet.

14. Vorrichtung nach einem der Ansprüche 1 bis 11, **dadurch gekennzeichnet, daß** die ausschaltbaren Übertragungsmittel (9) ein Reduktionsmittel (18) umfassen, das über einen Riemen (27) einen weiteren Riemen (27') antreibt, der die beiden Rollen (22', 23') verbindet, die unter der zu verschiebenden Funktionseinheit (2) angeordnet sind, wobei dieser Riemen (27') an seinem oberen oder unteren Rand durch den Klemmzylinder (26) eingeklemmt werden kann, wodurch die Verschieberichtung des angetriebenen beweglichen Rahmens (11) bestimmt wird.

15. Vorrichtung nach einem der Ansprüche 1 bis 11, **dadurch gekennzeichnet, daß** die ausschaltbaren Übertragungsmittel (9) ein Reduktionsmittel (18) umfassen, das einerseits mit dem angetriebenen Mittel (8) und andererseits mit einem beweglichen Rahmen (11), der die Funktionseinheit (2) darstellt, mittels eines ausschaltbaren Elements (19) verbunden ist, das von zwei Riemen (20, 20') gebildet ist, die eine Doppelrolle (21) des beweglichen Rahmens (11) der Funktionseinheit (2) mit zwei Rollen (22, 23) verbindet, die auf dem Reduktionsmittel (18) befestigt sind und entgegengesetzte Drehrichtungen sowie zwei ausschaltbare Riemenspanner (24, 25) aufweisen, die, indem sie den einen oder den anderen der beiden vorgenannten Riemen (20, 20') spannen, die Bewegungsumkehr des vorgenannten beweglichen Rahmens (11) ermöglichen.

16. Vorrichtung nach Anspruch 13 oder 15, **dadurch gekennzeichnet, daß** der Antrieb der Funktionseinheit (2) in die Richtung senkrecht auf die Ablaufrichtung des Blattes (3) mittels einer Trapezschraube (28) verwirklicht ist, die eine Doppel- oder Einfachrolle trägt, die von einem oder beiden Riemen und einer Mutter (29) angetrieben wird, und durch einen oder mehrere Endschalter (31) begrenzt und/oder umgekehrt wird.

17. Vorrichtung nach Anspruch 16, **dadurch gekennzeichnet, daß** sie einen Automatikmodus umfasst, bei dem die komplette Abtastung des Blattes (3) durch Hin- und Herbewegungen der Funktionseinheit (2) erfolgt.

18. Vorrichtung nach einem der Ansprüche 1 bis 17, **dadurch gekennzeichnet, daß** die Funktionseinheit (2) einen beweglichen Rahmen (11) umfasst, der in Form eines liegenden U ausgeführt ist, das seitlich durch Querbalken (32, 32') in Form eines liegenden V begrenzt ist.

19. Vorrichtung nach Anspruch 18, **dadurch gekennzeichnet, daß** der bewegliche Rahmen (11) seitlich durch im wesentlichen volle Wände (33, 33') begrenzt ist.

20. Vorrichtung nach Anspruch 19, **dadurch gekennzeichnet, daß** die seitlichen Zugänge zum Blatt (3) auf zwei Nuten (34, 34') beschränkt sind, die in den Wänden (33, 33') durch zwei kreisförmige Öffnungen (35, 35') mit größeren Durchmessern als die Breite der Nuten (34, 34') enden, wobei die Abmessungen dieser letztgenannten derart sind, daß sie den Durchgang des Blattes (3) mit dem minimal erforderlichen Spiel ermöglichen.

21. Vorrichtung nach einem der Ansprüche 1 bis 20, **dadurch gekennzeichnet, daß** sie ferner eine Platte umfasst, die als Stütz- und Führungsfläche für das zu bearbeitende Blatt (3) sowie als Kontrollfläche für den Zustand des Blattes (3) vor und nach der Bearbeitung dient.

## Claims

1. Device for repairing band saw blades, in particular for planing and tensioning them, comprising
- a support structure (1) carrying an operational assembly (2) which can be displaced perpendicularly to the direction of running of the blade (3) during treatment and comprising at least one planing means (4, 4') and at least one tensioning means (5),
- a means (6) for the friction drive of the blade (3), the means being connected to a motor (7) or similar and ensuring the running of the blade (3) to be treated,
**characterised in that** it comprises
- a means (8) driven by friction with the moving blade (3) and associated with disengageable transmission means (9) which are capable of transforming the running of the blade (3) into a proportional running for the transverse translation of the operational assembly (2).

2. Device according to claim 1, **characterised in that** it comprises at least one planing means (4) specifically for recesses, at least one planing means (4') specifically for bosses and at least one tensioning means (5).

3. Device according to claim 1 or 2, **characterised in that** the one or more planing means (4, 4') and/or the one or more tensioning means (5) is/are produced in the form of a group of opposing, non-driving rollers (10, 10', 10") capable of contacting either side of the blade surfaces (3) to be treated.

4. Device according to any one of claims 1 to 3, **characterised in that** the one or more planing means (4, 4') and/or the one or more tensioning means (5) comprises or comprise a convex central roller (10) opposing another convex roller (10).

5. Device according to any one of claims 1 to 3, **characterised in that** the one or more planing means (4, 4') and/or tensioning means (5) comprises or comprise a convex central roller (10) opposing a pair of flat rollers (10', 10").

6. Device according to any one of claims 1 to 5, **characterised in that** the spacing between the two convex central rollers (10) or a convex central roller (10) and the two opposing flat rollers (10', 10") of the one or more planing means (4, 4') and/or tensioning means (5) is produced by a mechanical adjustment means (13) which is actuated manually, hydraulically or pneumatically.

7. Device according to claim 6, **characterised in that** the mechanical adjustment means (13) comprises a ram (14) which is adjustable by pressure.

8. Device according to claim 6, **characterised in that** the mechanical adjustment means (13) comprises an endless screw (14') and an actuating handle (15).

9. Device according to any one of claims 1 to 8, **characterised in that** the friction drive means (6) is produced in the form of at least one pair of rolls (6', 6") of which the friction contact with the blade (3) is produced by a disengageable assembly of the pressure ram type (17).

10. Device according to any one of claims 1 to 9, **characterised in that** the means (8) driven by friction is produced in the form of at least one rigidly mounted pair of rolls (8', 8") connected to the friction drive means (6) and connected to disengageable transmission means (9) of the operational assembly (2).

11. Device according to any one of claims 3 to 9, **characterised in that** the rollers (10, 10', 10") on the lower side of the blade (3) have a plane tangential to the blade (3) which is common to the lower rolls (6', 8') of the drive means (6) and the driven means (8).

12. Device according to any one of claims 1 to 11, **characterised in that** the disengageable transmission means (9) comprise a reduction gear (18') comprising at least one reversible output connected, on the one hand, to the means (8) driven by the belt (16') and, on the other hand, to the movable frame (11) of the operational assembly (2) via a disengageable member (19).

13. Device according to claim 12, **characterised in that** the disengageable member (19) is a belt tightener (25') tightening the belt (20) which ensures the link between the reduction gear (18') and a single pulley driving the movable frame (11).

14. Device according to any one of claims 1 to 11, **characterised in that** the disengageable transmission means (9) comprise a reduction gear (18) which drives, by the bias of a belt (27), another belt (27') connecting the two pulleys (22', 23') disposed underneath the operational assembly (2) to be displaced, this belt (27') being pinchable on its upper or lower edge by the pinching ram (26), thus determining the direction of movement of the driven movable frame (11).

15. Device according to any one of claims 1 to 11, **characterised in that** the disengageable transmission means (9) comprise a reduction gear (18) connected, on the one hand, to the driven means (8) and, on the other hand, to a movable frame (11), which is a component of the operational assembly (2), via a disengageable member (19) consisting of two belts (20, 20') connecting a double pulley (21) of the movable frame (11) of the operational assembly (2) to two pulleys (22, 23) mounted on the reduction gear (18) and having opposite directions of rotation, and also two tighteners for the disengageable belt (24, 25) which on tightening either of the two above-mentioned belts (20, 20') allow the reversal of the running of the above-mentioned movable frame (11).

16. Device according to claim 13 or 15, **characterised in that** the operational assembly (2) is driven in the direction perpendicular to that of the running of the blade (3) by a trapezoidal screw (28) carrying a double or single pulley driven by one or two belt(s) and by a nut (29) . and is limited and/or reversed by one or more travel limit sensor(s) (31).

17. Device according to claim 16, **characterised in that** it comprises an automatic mode in which the complete sweep of the blade (3) is carried out by reciprocating movements of the operational element (2).

18. Device according to any one of claims 1 to 17, **characterised in that** the operational assembly (2) comprises a movable frame (11) in a horizontal U-shape which is delimited laterally by horizontal V-shaped struts (32, 32').

19. Device according to claim 18, **characterised in that** the movable frame (11) is delimited laterally by substantially solid walls (33, 33').

20. Device according to claim 19, **characterised in that** the lateral approaches to the blade (3) are limited to two grooves (34, 34') ending in said walls (33, 33') with two circular orifices (35, 35') with diameters which are greater than the width of said grooves (34, 34'), the dimensions of the grooves (34, 34') being such that they allow the passage of the blade (3) with the minimum necessary clearance.

21. Device according to any one of claims 1 to 20, **characterised in that** it also comprises a marble slab serving as a support and guide surface for the blade (3) to be treated and as a surface for controlling the state of the blade (3) before and after treatment.
